Europäisches Patentamt

European Patent Office

Office européen des brevets

(19)

(11) Numéro de publication: **0 216 679**
**B1**

(12)

# FASCICULE DE BREVET EUROPEEN

(45) Date de publication du fascicule du brevet:
11.04.90

(51) Int. Cl.⁴: **C08L 95/00**, C08J 3/11

(21) Numéro de dépôt: 86401879.1

(22) Date de dépôt: 26.08.86

(54) Compositions de solvants utilisables pour la réalisation de revêtements de bitume, solutions de polymères et revêtements de bitumes utilisant ces composants.

(30) Priorité: 30.08.85 FR 8512967

(43) Date de publication de la demande:
01.04.87 Bulletin 87/14

(45) Mention de la délivrance du brevet:
11.04.90 Bulletin 90/15

(84) Etats contractants désignés:
AT BE CH DE FR GB IT LI NL

(56) Documents cités:
FR-A- 1 172 421
FR-A- 2 376 188
FR-A- 2 533 935
US-A- 4 459 157

Le dossier contient des informations techniques présentées postérieurement au dépôt de la demande et ne figurant pas dans le présent fascicule.

(73) Titulaire: COMPAGNIE DE RAFFINAGE ET DE DISTRIBUTION TOTAL FRANCE: Société Anonyme dite, 5, rue Michel Ange, F-75781 Paris Cédex 16(FR)

(72) Inventeur: Jolivet, Yannick, 15, rue du Docteur Le Nouene, F-76600 Le Havre(FR)
Inventeur: Chevrier, Edgar, 16, rue des Haliates, F-76600 Le Havre(FR)

(74) Mandataire: Jolly, Jean-Pierre et al, Cabinet BROT et JOLLY 83, rue d'Amsterdam, F-75008 Paris(FR)

**Description**

La présente invention concerne des compositions de solvants utilisables pour la réalisation de revêtements de bitume. Elle concerne également des solutions de polymères et des revêtements de bitumes utilisant ces solutions.

Il est bien connu d'utiliser des solvants pour réaliser des revêtements de bitume, notamment des revêtements routiers; ces revêtements peuvent contenir, outre le bitume, un polymère destiné à améliorer les propriétés mécaniques des revêtements telles que leur susceptibilité thermique et leur durée de vie. L'emploi de solvants facilite la mise en oeuvre du bitume et du polymère, quand celui-ci est employé.

Le choix des solvants est critique. En particulier, dans le cas de l'emploi de polymères, ceux-ci peuvent se trouver dégradés et la qualité du revêtement diminuée.

Le but de la présente invention est donc de remédier à ces inconvénients en proposant des revêtements de bitume de bonne qualité.

A cet effet, l'invention a pour objet des compositions de solvants utilisables pour la réalisation de revêtements de bitume, lesdites compositions étant caractérisées en ce qu'elles sont composées:

- a) de 1 à 99 % en poids, de préférence de 20 à 80 % en poids et, mieux encore, de 40 à 60 % en poids d'au moins un solvant hydrocarboné léger ayant une masse volumique comprise entre 700 kg/m$^3$ et 950 kg/m$^3$ et, de préférence, comprise entre 750 kg/m$^3$ et 950 kg/m$^3$,

- b) de 99 à 1 % en poids, de préférence de 80 à 20 % en poids et, mieux encore, de 60 à 40% en poids d'au moins un solvant hydrocarboné lourd ayant une masse volumique comprise entre 950 kg/m$^3$ et 1050 kg/m$^3$.

Dans cette définition de l'invention et dans la suite de la présente description, la masse volumique est celle mesurée à 15°C, conformément à la norme AFNOR NFT 60 - 101. L'invention a également pour objet des solutions d'au moins un polymère dans les compositions de solvants décrites ci-dessus.

L'invention a en outre pour objet des revêtements de bitume, contenant éventuellement au moins un polymère, réalisés à l'aide des compositions de solvants décrites ci-dessus.

Outre la masse volumique définie précédemment, le solvant léger a un point initial d'ébullition supérieur à 70°C et, de préférence, supérieur à 150°C.

Dans cette définition et dans la suite de la présente description, on entend par point initial d'ébullition du solvant léger celui mesuré conformément à la norme AFNOR NFM 07 - 002.

Le solvant léger a, de préférence, un point éclair, déterminé selon la norme AFNOR NFM 07 - 011, supérieur ou égal à 30°C, et un point éclair, déterminé selon la norme AFNOR NFT 60 - 103, inférieur à 100°C.

Le solvant léger peut être notamment constitué par une coupe pétrolière ayant les caractéristiques définies cidessus et appelée pétrole lampant, kérosène ou white spirit.

Outre la masse volumique définie précédemment, le solvant lourd a un point initial d'ébullition supérieur à 300°C et, de préférence, supérieur à 350°C. Le point initial du solvant lourd est déterminé conformément à la norme ASTM D1160.

Le solvant lourd a, de préférence, un point éclair, déterminé selon la norme AFNOR NFT 60 - 103, compris entre 150 et 300°C.

Le solvant lourd peut être notamment constitué par un extrait aromatique obtenue dans la fabrication de bases d'huiles lubrifiantes, par extraction, par exemple par le furfural, des hydrocarbures aromatiques des coupes obtenues par distillation sous pression réduite du résidu de la distillation sous pression atmosphérique du pétrole brut ou le désasphaltage au propane ou au butane de ces coupes.

Les compositions de solvants selon l'invention peuvent être utilisées pour réaliser des revêtements de bitume contenant éventuellement au moins un polymère.

Les bitumes qui peuvent être utilisés pour la réalisation de tels revêtements peuvent être obtenus, par exemple:

- a) par distillation directe d'un pétrole brut,
- b) par oxydation, en présence ou non de catalyseurs, d'un résidu de distillation du pétrole brut,
- c) par oxydation, en présence ou non de catalyseurs, d'un mélange d'un tel résidu et d'un distillat ou d'un extrait aromatique obtenu dans la désaromatisation des huiles lubrifiantes ou d'un brai de désasphaltage;
- d) par mélange d'un bitume oxydé, tel que décrit ci-dessus ou d'une base bitumineuse dure et d'un distillat ou d'un extrait aromatique obtenu dans la désaromatisation des huiles lubrifiantes, ou d'un brai de désasphaltage, ou d'un résidu de distillation du pétrole brut.

Ces bitumes peuvent être éventuellement acidifiés et/ou additionnés de dopes d'adhésivité connus. Il est également possible de leur ajouter des antioxydants. Les polymères qui peuvent être utilisés pour la réalisation des revêtements peuvent être notamment:
- des polyoléfines (polyéthylène, polypropylène, polyisobutylène) ou les copolymères de ces oléfines,
- des copolymères de l'isobutylène et de l'isoprène,
- des copolymères de l'éthylène et du propylène et, éventuellement, d'un diène,

- des copolymères du styrène et du butadiène ou de l'isoprène, statistiques ou séquencés (linéaires ou radiaux), de préférence triséquencés, éventuellement modifiés par des groupements carboxyliques ou hydrogénés,
- des copolymères de l'éthylène et de l'acétate de vinyle, modifiés ou non.

Les revêtements de bitume (sans polymère) peuvent contenir:

- a) de 40 à 98 % en poids et, de préférence, de 70 à 95 % en poids de bitume,
- b) de 60 à 2 % en poids et, de préférence, de 30 à 5 % en poids de la composition de solvants.

Les revêtements de bitume et de polymère obtenus à l'aide des compositions de solvants selon l'invention peuvent contenir:

- a) de 35 à 98 % en poids et, de préférence, de 70 à 90 % en poids, de bitume,
- b) de 20 à 0,2 % en poids et, de préférence, de 5 à 1 % en poids, de polymère,
- c) de 45 à 1,8 % en poids et, de préférence, de 25 à 9 % en poids, de la composition de solvants.

Les revêtements de bitume et éventuellement de polymère selon l'invention peuvent être obtenus de différentes façons.

Bien que la présence des deux solvants entrant dans la composition de solvants soit nécessaire pour l'emploi de ces revêtements, ces deux solvants peuvent ne pas être additionnés simultanément.

On peut, par exemple, ajouter au bitume, porté à une température de 130 à 160°C environ, les deux solvants l'un après l'autre, puis éventuellement le polymère.

Le polymère peut être également ajouté après l'un des deux solvants et avant l'autre.

Dans une forme préférée de mise en oeuvre, pour la réalisation de revêtements contenant un polymère, on ajoute au bitume, porté à une température de 130 à 160°C environ une solution mère, portée à une température de 80 à 110°C environ, obtenue par dissolution du polymère dans la composition de solvants.

Ces mélanges peuvent être obtenus de façon bien connue de l'Homme de l'Art à l'aide de malaxeurs ou par un mélange en ligne.

Les proportions relatives des différents solvants peuvent être adaptées l'une à l'autre en fonction de leurs natures et de celles du bitume et du polymère, dont la proportion est également adaptée en conséquence.

Les revêtements de bitume et éventuellement de polymère obtenus à l'aide des compositions de solvants selon l'invention peuvent être utilisés notamment comme revêtements de route (principalement enduits superficiels ou enduits épais) ou dans la construction.

Les revêtements de route sont réalisés à partir de bitumes ayant un point de ramollissement, déterminé conformément à la norme AFNOR NFT 66 - 008, inférieur à 100°C.

Les mélanges peuvent être répandus tels quels, ou après formation d'émulsions aqueuses à l'aide d'émulsifiants.

Les mélanges peuvent être additionnés de façon connue de l'Homme de l'Art avec des granulats, du sable et des fillers.

L'exemple qui suit est destiné à illustrer l'invention de façon non limitative.

EXEMPLE

Cet exemple concerne la réalisation, à partir de différentes compositions de solvants selon l'invention:

- 1) de différentes solutions mères de polymères,
- 2) de divers revêtements de bitume et éventuellement de polymères à partir des différentes solutions mères.

On y décrira également des essais mécaniques destinés à montrer l'intérêt des ces revêtements.

On a réalisé des solutions mères de polymères à partir de quatre compositions de solvants, A, B, C, D et E.

Solutions mères de polymères à partir de la composition de solvants A

On dissout un certain nombre de polymères dans la composition de solvants A, qui est constituée:

- a) de 50 % en poids d'une coupe de pétrole lampant ayant une masse volumique de 790 kg/m³ et un point initial d'ébullition de 150°C, ayant un point éclair, selon la norme AFNOR NFM 07 - 011, de 45°C.
- b) de 50 % en poids d'un extrait aromatique d'huile ayant une masse volumique de 980 kg/m³ et un point initial d'ébullition de 375°C, ayant un point éclair, selon la norme AFNOR NFT 60 - 103, de 210°C.

On a réalisé à partir de cette composition de solvants différentes solutions mères, SMA₁ à SMA₆, dont le détail est donné dans le Tableau I ci-après.

Solution mère de polymère à partir de la composition de solvants B

On dissout à 90°C un copolymère styrène-butadiène-styrène séquencé radial, d'une masse moléculaire moyenne en poids de 160 000, dans la composition de solvant B, qui est composée:

- a) de 45 % en poids d'une coupe de pétrolière de white spirit ayant une masse volumique de 780 kg/m³ et un point initial d'ébullition de 150°C, ayant un point éclair, selon la norme AFNOR NFM 07 - 011, de 40°C.
- b) de 55 % en poids d'un extrait aromatique d'huile ayant une masse volumique de 980 kg/m³ et un point initial d'ébullition de 375°C, ayant un point éclair, selon la norme AFNOR NFT 60 - 103, de 210°C.

On obtient ainsi la solution mère de polymère SMB contenant 25 % en poids de polymère.

Solution mixte de polymère à partir de la composition de solvants C

On dissout à 90°C un copolymère styrène-butadiène-styrène séquencé radial, d'une masse moléculaire moyenne en poids de 160 000 dans la composition de solvants C, qui est constituée:

- a) de 50 % en poids d'une coupe de pétrolière de kérosène ayant une masse volumique de 795 kg/m³ et un point initial d'ébullition de 185°C, ayant un point éclair, selon la norme AFNOR NFT 60 - 103, de 70°C.
- b) de 50 % en poids d'un extrait aromatique d'huile ayant une masse volumique de 980 kg/m³ et un point initial d'ébullition de 375°C, ayant un point éclair, selon la

TABLEAU I

| Solution Mère N° | Nature du polymère | Pourcentage de polymère Dans la solution en % poids | Température de dissolution du polymère en °C |
|---|---|---|---|
| SMA 1 | Copolymère styrène-butadiène-styrène séquencé radial d'une masse moléculaire moyenne en poids de 160 000 (% styrène: 30) | 20 | 100 |
| SMA 2 | Copolymère styrène-butadiène-styrène séquencé linéaire d'une masse moléculaire moyenne en poids de 300 000 (% styrène: 30) | 20 | 100 |
| SMA 3 | Copolymère éthylène-propylène-diène d'une masse moléculaire en poids de 180 000 | 20 | 100 |
| SMA 4 | Copolymère éthylène-acétate de vinyle (% acétate de vinyle: 18); indice de fusion (1): 150 | 20 | 100 |
| SMA 5 | Copolymère éthylène-acétate de vinyle (% acétate de vinyle: 23); indice de fusion (1): 15 | 20 | 100 |
| SMA 6 | Copolymère biséquencé styrène butadiène modifié par des groupements carboxyliques de masse moléculaire en poids: 100 000 (% styrène: 15) | 20 | 100 |

(1) Selon norme ASTM D 1238 (unités g/10 mn)

norme AFNOR NFT 60 - 103, de 210°C.

On obtient ainsi la solution mère de SMC contenant 20 % en poids de polymère.

Solution mère de polymère à partir de la composition de solvants D

On dissout à 90°C un copolymère styrène-butadiène-styrène séquencé radial, d'une masse moléculaire moyenne en poids de 160 000, dans la composition de solvants D, qui est constituée:

- a) de 45 % en poids d'une coupe de pétrolière de white spirit ayant une masse volumique de 780 kg/m³ et un point initial d'ébullition de 150°C, ayant un point éclair, selon la norme AFNOR NFM 07 - 011, de 40°C.
- b) de 55 % en poids d'un extrait aromatique d'huile ayant une masse volumique de 1030 kg/m³ et un point initial d'ébullition de 400°C, ayant un point éclair, selon la norme AFNOR NFT 60 - 103, de 240°C.

On obtient ainsi la solution mère de polymère SMD contenant 20 % en poids de polymère.

Solution mère de polymère à partir de la composition de solvants E

On dissout à 90°C un copolymère styrène-butadiène-styrène séquencé radial, d'une masse moléculaire moyenne en poids de 160 000, dans la composition de solvants E, qui est constituée:

- a) de 60 % en poids d'une coupe pétrolière ayant une masse volumique de 930 kg/m³ et un point initial d'ébullition de 170°C, ayant un point éclair, selon la norme AFNOR NFT 60 - 103, de 80°C.
- b) de 40 % en poids d'un extrait aromatique d'huile ayant une masse volumique de 980 kg/m³ et un point initial d'ébullition de 375°C, ayant un point éclair, selon la norme AFNOR NFT 60 - 103, de 210°C.

On obtient ainsi la solution mère de polymère SME contenant 20 % de polymère.

Préparation de revêtements de bitume, contenant éventuellement un polymère, à partir de compositions de solvants ou de solutions mères

On a préparé différents revêtements sur lesquels on a effectué divers essais.
La composition des différents revêtements est donnée dans le Tableau II ci-après.
Les différents types de bitume utilisés sont les suivants:

(1) Bitume de pénétrabilité, selon norme AFNOR NFT 66 004, 60/70, 1/10 mm. et de point de ramollissement, selon norme AFNOR NFT 66 - 008, de 50°C.
(2) Bitume de pénétrabilité, selon norme AFNOR NFT 66 004, 80/100, 1/10 mm. et de point de ramollissement, selon norme AFNOR NFT 66 - 008, de 45°C.
(3) Bitume de pénétrabilité, selon norme AFNOR NFT 66 004, 180/220, 1/10 mm. et de point de ramollissement, selon norme AFNOR NFT 06 - 008, de 40°C.

On donne ci-après, pour quelques revêtements selon l'invention, différentes caractéristiques:
- Pour des revêtements avec ou sans polymère:
* adhésivité liant bitumineux - granulat à l'état neuf,
* tenue du mélange liant bitumineux - granulat à l'état vieilli avec manège simulateur de trafic lourd.
- En plus, pour des revêtements avec polymère, la cohésivité.

TABLEAU II

| Revêtement N° | Solvant ou Solution Mère N° | % de Solvant ou de Solution mère dans le Revêtement | Bitume N° |
|---|---|---|---|
| RBA1 | A | 14 | 1 |
| RBA2 | A | 12 | 2 |
| RBA3 | A | 8 | 3 |
| RBPA1 | SMA 1 | 18 | 3 |
| RBPA2 | SMA 2 | 18 | 3 |
| RBPA3 | SMA 3 | 18 | 3 |
| RBPA4 | SMA 4 | 18 | 3 |
| RBPA5 | SMA 5 | 18 | 3 |
| RBPA6 | SMA 6 | 18 | 3 |
| RBPB | SMB | 20 | 2 |
| RBPC | SMC | 18 | 2 |
| RBPD | SMD | 18 | 3 |
| RBPE | SME | 17 | 3 |

L'adhésivité entre le liant à l'état neuf et les granulats est déterminée par l'essai à la plaque Vialit (référence: "Directive pour la réalisation des enduits superficiels". Ministère de l'Equipement, SETRA et LCPC).
Pour la mesure de la tenue de mélange liant bitumineux - granulat, le vieillissement du liant se fait en étuve ventilée pendant 15 jours à 50°C, avec un dosage de 1 kg/m², selon la méthode du Laboratoire Central des Ponts et Chaussées (référence : A.M. AJOUR-J. GIGER. Bulletin de Liaison du Laboratoire des Ponts et Chaussées -119- Mai-Juin 1982).
Pour la tenue dans le temps d'un revêtement de bitume, le maintien d'un faible rejet de granulats est un paramètre primordial, d'où l'importance de l'essai sur manège simulateur de trafic lourd. Il faut, bien entendu, s'assurer que, à l'état neuf, il y a une bonne affinité entre le revêtement de bitume et les granulats, d'où l'importance de l'essai d'adhésivité.

Le manège simulateur de trafic lourd (voir l'article de B. RONCIN. Bulletin de Liaison du Laboratoire des Ponts et Chaussées -114 - Juillet-Août 1981) permet de simuler, sur une éprouvette d'enduit, l'action d'une roue de poids lourd gonflée à 5 bars, chargée à 3,5 tonnes, roulant en virage à 40 km/h et subissant une décélération de 3 m/s². L'ensemble est maintenu à une température régulée tout au long de l'essai.

Les éprouvettes sont constituées d'un support en béton bitumineux sur lequel le liant vieilli (15 jours, 50°C, 1 kg/m²) est étalé (dosage: 1,4 kg/m²). Des granulats 6/10 sont répandus (dosage: 11 l/m² et compactés. A la température d'essai, la tenue du revêtement est déterminée quantitativement par le taux de rejet de granulats à 5.10³ cycles.

On donne, dans le Tableau III ci-après, des résultats obtenus avec un mélange sans polymère selon l'invention et un mélange témoin T1 du marché ayant la même viscosité.

## TABLEAU III

| Revêtement | Adhésivité globale par rapport à 100 granulats 10°C, 1,3 kg/m² granulats 10/14 | % de rejets de granulats 5°C - 5.10³ cycles |
|---|---|---|
| T1 | 100 | 88 |
| RBA3 | 100 | 40 |

Le Tableau III permet de constater la supériorité des revêtements selon l'invention.

On donne, dans le Tableau IV ci-après, les résultats obtenus avec deux mélanges avec polymère selon l'invention et un mélange témoin T2 du marché.

## TABLEAU IV

| Revêtement | Adhésivité globale par rapport à 100 granulats 10°C, 1,3 kg/m² granulats 10/14 | % de rejets de granulats 5°C - 5.10³ cycles |
|---|---|---|
| T2 | 66 | 75 |
| RBPA1 | 100 | 15 |
| RBPE | 100 | 10 |

Le Tableau IV permet également de constater la supériorité des revêtements selon l'invention.

6

Par ailleurs, dans le cas de tels revêtements contenant des polymères, le choix du système polymère-solvant est important pour le maintien dans le temps des performances apportées par le polymère. La mesure de la cohésivité est un moyen de suivre l'évolution des performances. Le maintien d'une cohésivité élevée dans la plus large gamme de température est un paramètre important (référence: Communication de Y. JOLIVET et E. CHEVRIER au 3ème Eurobitume Symposium 1985. Vol 1 IV-20. page 584, "Corrélation entre le vieillissement in situ et au laboratoire de liants modifiés anhydres").

La cohésivité est mesurée à l'aide du mouton-pendule Vialit. La description de l'appareillage fait l'objet d'une publication de M. BROSSEL, "Notions sur la mesure de la cohésivité des liants routiers". La mesure consiste en la détermination de l'énergie absorbée par la rupture d'un film de liant, à différentes températures, sous l'action d'un choc entre un cube d'acier, représentant le granulat et le mouton-pendule.

Le Tableau V ci-après montre l'évolution, pour des revêtements selon l'invention et des revêtements témoin T2, avant et après vieillissement, du maximum CM de la cohésivité et de la température TM correspondant à ce maximum, étant entendu qu'il est souhaitable que le liant vieilli ne présente pas une dégradation trop importante de CM et un trop fort déplacement de TM vers les hautes températures.

## TABLEAU V

| Revêtement | Neuf | | Vieilli (15 jours, 50°C, 1 kg/cm$^2$) | |
|---|---|---|---|---|
| | CM (kg/cm$^2$) | TM (°C) | CM (kg/cm$^2$) | TM (°C) |
| T2 | 13 | 14 | 10 | 40 |
| RBPA1 | 15 | 7 | 14,5 | 26 |
| RBPA2 | 23 | 5 | 22 | 25 |
| RBPA3 | 18 | 5 | 17 | 25 |
| RBPA5 | 13 | 12 | 13 | 32 |
| RBPB | 20 | 11 | 19 | 31 |
| RBPC | 15 | 15 | 15 | 34 |

Ce tableau montre la supériorité des revêtements selon l'invention.

## Revendications

1. Compositions de solvants utilisables pour la réalisation de revêtements de bitume et éventuellement de polymère, lesdites compositions étant caractérisées en ce qu'elles sont composées:
   a) de 1 à 99 % en poids d'au moins un solvant hydrocarboné léger ayant une masse volumique comprise entre 700 kg/m³ et 950 kg/m³;
   b) de 99 à 1 % en poids d'au moins un solvant hydrocarboné lourd ayant une masse volumique comprise entre 950 kg/m³ et 1 050 kg/m³.

2. Compositions selon la revendication 1, caractérisées en ce qu'elles comprennent de 20 à 80 % en poids du solvant hydrocarboné léger.

3. Compositions selon la revendication 1, caractérisées en ce qu'elles comprennent de 40 à 60 % en poids du solvant hydrocarboné léger.

4. Compositions selon l'une des revendications 1 à 3, caractérisées en ce que le solvant hydrocarboné léger a une masse volumique comprise entre 750 kg/m$^3$ et 950 kg/m$^3$.

5. Compositions selon l'une des revendications 1 à 4, caractérisées en ce qu'elles comprennent de 80 à 20% en poids du solvant hydrocarboné lourd.

6. Compositions selon l'une des revendications 1 à 4, caractérisées en ce qu'elles comprennent de 60 à 40 % en poids du solvant hydrocarboné lourd.

7. Compositions selon l'une des revendications 1 à 6, caractérisées en ce que le solvant léger a un point d'ébullition supérieur à 70°C.

8. Compositions selon l'une des revendications 1 à 6, caractérisées en ce que le solvant léger a un point d'ébullition supérieur à 150°C.

9. Compositions selon l'une des revendications 1 à 8, caractérisées en ce que le solvant lourd a un point d'ébullition supérieur à 300°C.

10. Compositions selon l'une des revendications 1 à 8, caractérisées en ce que le solvant lourd a un point d'ébullition supérieur à 350°C.

11. Compositions selon l'uns des revendications 1 à 10, caractérisées en ce que le solvant léger a un point éclair, déterminé selon la norme AFNOR NFM 07-011, supérieur ou égal à 30°C, et un point éclair, déterminé selon la norme AFNOR NFT 60-103, inférieur à 100°C.

12. Compositions selon l'une des revendications 1 à 11, caractérisées en ce que le solvant lourd a un point éclair, déterminé selon la norme AFNOR NFT 60-103, compris entre 150 et 300°C.

13. Revêtements de bitume, caractérisés en ce qu'ils contiennent:
a) de 40 à 98% en poids de bitume,
b) de 60 à 2% en poids d'une composition de solvants selon l'une des revendications 1 à 12.

14. Revêtements selon la revendication 13, caractérisés en ce qu'ils contiennent de 70 à 95 % en poids de bitume.

15. Revêtements selon l'une des revendications 13 et 14, caractérisés en ce qu'ils contiennent de 30 à 5% en poids d'une composition de solvants selon l'une des revendications 1 à 12.

16. Solutions d'au moins un polymère, caractérisées en ce que le polymère est dissous dans une composition de solvants selon l'une des revendications 1 à 12.

17. Revêtements de bitume et de polymère, caractérisés en ce qu'ils contiennent:
a) de 35 à 98% en poids de bitume,
b) de 20 à 0,2% en poids de polymère,
c) de 45 à 1, 8% en poids d'une composition de solvants selon l'une des revendications 1 à 12.

18. Revêtements selon la revendication 17, caractérisés en ce qu'ils contiennent de 70 à 90% en poids de bitume.

19. Revêtements selon l'une des revendications 17 et 18, caractérisés en ce qu'ils contiennent de 5 à 1% en poids de polymère.

20. Revêtements selon l'une des revendications 18 à 20, caractérisés en ce qu'ils comprennent de 25 à 9% en poids d'une composition de solvants selon l'une des revendications 1 à 12.

21. Solutions selon la revendication 16, caractérisées en ce que le polymère est choisi dans le groupe constitué par:
- les polyoléfines et les copolymères d'oléfines,
- les copolymères de l'isobutylène et de l'isoprène,
- les copolymères de l'éthylène et du propylène et éventuellement d'un diène,
- les copolymères du styrène et du butadiène ou de l'isoprène triséquencés, éventuellement modifiés par des groupements carboxyliques ou hydrogénés,
- des copolymères de l'éthylène et de l'acétate de vinyle modifiés ou non.

22. Solutions selon la revendication 21, caractérisées en ce que le polymère est un copolymère triséquencé du styrène et du butadiène.

23. Revêtements selon la revendication 17, caractérisés en ce que le polymère est choisi dans le groupe constitué par:
- les polyoléfines et les copolymères d'oléfines,
- les copolymères de l'isobutylène et de l'isoprène,
- les copolymères de l'éthylène et du propylène et éventuellement d'un diène,
- les copolymères du styrène et du butadiène ou de l'isoprène triséquencés, éventuellement modifiés par des groupements carboxyliques ou hydrogénés,
- des copolymères de l'éthylène et de l'acétate de vinyle modifiés ou non.

24. Revêtements selon la revendication 23, caractérisés en ce que le polymère est un copolymère triséquencé du styrène et du butadiène.

## Claims

1. Solvent compositions which can be used for producing coverings of bitumen and, optionally with polymer, said compositions being characterised in that they are composed:
a) of from 1 to 99 % by weight of at least one light hydrocarbon solvent having a mass density of between 700 kg/m³ and 950 kg/m³;
b) of from 99 to 1 % by weight of at least one heavy hydrocarbon solvent having a mass density of between 950 kg/m³ and 1,050 kg/m³.

2. Compositions according to claim 1, characterised in that they comprise from 20 to 80 % by weight of the light hydrocarbon solvent.

3. Compositions according to claim 1, characterised in that they comprise from 40 to 60 % by weight of the light hydrocarbon solvent.

4. Compositions according to any one of claims 1 to 3, characterised in that the light hydrocarbon solvent has a mass density of between 750 kg/m³ and 950 kg/m³.

5. Compositions according to any one of claims 1 to 4, characterised in that they comprise from 80 to 20 % by weight of the heavy hydrocarbon solvent.

6. Compositions according to any one of claims 1 to 4, characterised in that they comprise from 60 to 40 % by weight of the heavy hydrocarbon solvent.

7. Compositions according to any one of claims 1 to 6, characterised in that the light solvent has a boiling point above 70°C.

8. Compositions according to any one of claims 1 to 6, characterised in that the light solvent has a boiling point above 150°C.

9. Compositions according to any one of claims 1 to 8, characterised in that the heavy solvent has a boiling point above 300°C.

10. Compositions according to any one of claims 1 to 8, characterised in that the heavy solvent has a boiling point above 350°C.

11. Compositions according to any one of claims 1 to 10, characterised in that the light solvent has a flash point, determined in accordance with the standard AFNOR NFM 07-011, above or equal to 30°C and a flash point, determined in accordance with the standard AFNOR NFT 60-103, below 100°C.

12. Compositions according to any one of claims 1 to 11, characterised in that the heavy solvent has a flash point, determined in accordance with the standard AFNOR NFT 60-103, of between 150 and 300°C.

13. Bitumen coverings, characterised in that they contain:
a) from 40 to 98 % by weight of bitumen;
b) from 60 to 2 % by weight of a composition of solvents according to any one of claims 1 to 12.

14. Coverings according to claim 13, characterised in that they contain from 70 to 95 % by weight of bitumen.

15. Coverings according to either of claims 13 and 14, characterised in that they contain from 30 to 5 % by weight of a composition of solvents according to any one of claims 1 to 12.

16. Solutions of at least one polymer, characterised in that the polymer is dissolved in a composition of solvents according to any one of claims 1 to 12.

17. Bitumen and polymer coverings, characterised in that they contain:
a) from 35 to 98 % by weight of bitumen;
b) from 20 to 0.2 % by weight of polymer;
c) from 45 to 1.8 % by weight of a composition of solvents according to any one claims 1 to 12.

18. Coverings according to claim 17, characterised in that they contain from 70 to 90 % by weight of bitumen.

19. Coverings according to either of claims 17 and 18, characterised in that they contain from 5 to 1 % by weight of polymer.

20. Coverings according to any one of claims 18 to 20, characterised in that they comprise from 25 to 9 % by weight of a composition of solvents according to any one of claims 1 to 12.

21. Solutions according to claim 16, characterised in that the polymer is selected from the group comprising:
- the polyolefins and copolymers of olefins;
- the copolymers of isobutylene and isoprene;
- the copolymers of ethylene and propylene and, optionally, of a diene;
- the trisequenced copolymers of styrene and butadiene or of isoprene, optionally modified by carboxylic or hydrogenated groups;
- modified or unmodified copolymers of ethylene and vinyl acetate.

22. Solutions according to claim 21, characterised in that the polymer is a trisequenced copolymer of styrene and butadiene.

23. Coverings according to claim 17, characterised in that the polymer is selected from the group comprising:
- the polyolefins and copolymers of olefins;
- the copolymers of isobutylene and isoprene;
- the copolymers of ethylene and propylene and, optionally, of a diene;

- the trisequenced copolymers of styrene and butadiene or of isoprene, optionally modified by carboxylic or hydrogenated groups;
- modified or unmodified copolymers of ethylene and vinyl acetate.

24. Coverings according to claim 23, characterised in that the polymer is a trisequenced copolymer of styrene and butadiene.

## Patentansprüche

1. Lösungsmittelzusammensetzungen zur Herstellung von Bitumenüberzugsmittel und gegebenenfalls von Polymerüberzugsmittel, welche dadurch gekennzeichnet sind, daß sie aus

a) 1 bis 99 Gew.-% eines leichten Kohlenwasserstofflösungsmittels, welches eine Dichte zwischen 700 kg/m$^3$ und 950 kg/m$^3$ besitzt; und

b) 99 bis 1 Gew.-% wenigstens eines schweren Kohlenwasserstofflösungsmittels, welches eine Dichte zwischen 950 kg/m$^3$ und 1050 kg/m$^3$ besitzt, zusammengesetzt sind.

2. Zusammensetzungen nach Anspruch 1, dadurch gekennzeichnet, daß sie 20 bis 80 Gew.-% des leichten Kohlenwasserstofflösungsmittels enthalten.

3. Zusammensetzungen nach Anspruch 1, dadurch gekennzeichnet, daß sie 40 bis 60 Gew.-% des leichten Kohlenwasserstofflösungsmittels enthalten.

4. Zusammensetzungen nach einem der Ansprüche 1 bis 3, dadurch gekennzeichnet, daß das leichte Kohlenwasserstofflösungsmittel eine Dichte zwischen 750 kg/m$^3$ und 950 kg/m$^3$ aufweist.

5. Zusammensetzungen nach einem der Ansprüche 1 bis 4, dadurch gekennzeichnet, daß sie 80 bis 20 Gew.-% des schweren Kohlenwasserstofflösungsmittels enthalten.

6. Zusammensetzungen nach einem der Ansprüche 1 bis 4, dadurch gekennzeichnet, daß sie 60 bis 40 Gew.-% des schweren Kohlenwasserstofflösungsmittels enthalten.

7. Zusammensetzungen nach einem der Ansprüche 1 bis 6, dadurch gekennzeichnet, daß das leichte Lösungsmittel einen Siedepunkt von über 70°C aufweist.

8. Zusammensetzungen nach einem der Ansprüche 1 bis 6, dadurch gekennzeichnet, daß das leichte Lösungsmittel einen Siedepunkt von über 150°C aufweist.

9. Zusammensetzungen nach einem der Ansprüche 1 bis 8, dadurch gekennzeichnet, daß das schwere Lösungsmittel einen Siedepunkt von über 300°C aufweist.

10. Zusammensetzungen nach einem der Ansprüche 1 bis 8, dadurch gekennzeichnet, daß das schwere Lösungsmittel einen Siedepunkt von über 350°C aufweist.

11. Zusammensetzungen nach einem der Ansprüche 1 bis 10, dadurch gekennzeichnet, daß das leichte Lösungsmittel einen nach der Norm AFNOR NFM 07-011 bestimmten Zündpunkt von größer oder gleich 30°C und einen nach der Norm AFNOR NFT 60-103 bestimmten Zündpunkt von unter 100°C aufweist.

12. Zusammensetzungen nach einem der Ansprüche 1 bis 11, dadurch gekennzeichnet, daß das schwere Lösungsmittel einen nach der Norm AFNOR NFT 60-103 bestimmten Zündpunkt zwischen 150 und 300°C aufweist.

13. Bitumenüberzüge, dadurch gekennzeichnet, daß sie

a) 40 bis 98 Gew.-% Bitumen, und

b) 60 bis 2 Gew.-% einer Lösungsmittelzusammensetzung nach einem der Ansprüche 1 bis 12 enthalten.

14. Überzüge nach Anspruch 13, dadurch gekennzeichnet, daß sie 70 bis 95 Gew.-% Bitumen enthalten.

15. Überzüge nach einem der Ansprüche 13 oder 14, dadurch gekennzeichnet, daß sie 30 bis 5 Gew.-% einer Lösungsmittelzusammensetzung nach einem der Ansprüche 1 bis 12 enthalten.

16. Lösungen von wenigstens einem Polymer, dadurch gekennzeichnet, daß das Polymer in einer Lösungsmittelzusammensetzung nach einem der Ansprüche 1 bis 12 gelöst ist.

17. Bitumen- und Polymerüberzüge, dadurch gekennzeichnet, daß sie

a) 35 bis 98 Gew.-% Bitumen

b) 20 bis 0, 2 Gew.-% Polymer, und

c) 45 bis 1, 8 Gew.-% einer Lösungsmittelzusammensetzung nach einem der Ansprüche 1 bis 12 enthalten.

18. Überzüge nach Anspruch 17, dadurch gekennzeichnet, daß sie 70 bis 90 Gew.-% Bitumen enthalten.

19. Überzüge nach einem der Ansprüche 17 oder 18, dadurch gekennzeichnet, daß sie 5 bis 1 Gew.-% Polymer enthalten.

20. Überzüge nach einem der Ansprüche 17 bis 19, dadurch gekennzeichnet, daß sie 25 bis 9 Gew.-% einer Lösungsmittelzusammensetzung nach einem der Ansprüche 1 bis 12 enthalten.

21. Lösungen nach Anspruch 16, dadurch gekennzeichnet, daß das Polymer aus der Gruppe bestehend aus:

- den Polyolefinen und den Olefin-Copolymeren,
- den Copolymeren aus Isobutylen und Isopren,
- den Copolymeren aus Ethylen und Propylen sowie gegebenenfalls einem Dien,
- den Copolymeren aus Styrol und Butadien oder einem trisequenziellen Isopren, welches gegebenenfalls durch Wasserstoff oder Carboxylgruppen modifiziert ist,

- den Copolymeren aus Ethylen und Vinylacetat, welches gegebenenfalls modifiziert ist, gewählt ist.

22. Lösungen nach Anspruch 21, dadurch gekennzeichnet, daß das Polymer ein trisequenzielles Polymer aus Styrol und Butadien ist.

23. Überzüge nach Anspruch 17, dadurch gekennzeichnet, daß das Polymer aus der Gruppe bestehend aus:

- den Polyolefinen und den Olefin-Copolymeren,
- den Copolymeren aus Isobutylen und Isopren,
- den Copolymeren aus Ethylen und Propylen sowie gegebenenfalls einem Dien,
- den Copolymeren aus Styrol und Butadien oder einem trisequenziellen Isopren, welches gegebenenfalls durch Wasserstoff oder Carboxylgruppen modifiziert ist,
- den Copolymeren aus Ethylen und Vinylacetat, welches gegebenenfalls modifiziert ist, gewählt ist.

24. Überzüge nach Anspruch 23, dadurch gekennzeichnet, daß das Polymer ein trisequenzielles Polymer aus Styrol und Butadien ist.